# EUROPÄISCHE PATENTSCHRIFT

(11) **EP 2 554 820 B1**
(45) Veröffentlichungstag und Bekanntmachung des Hinweises auf die Patenterteilung: **14.12.2016**
(21) Anmeldenummer: 11176370.2
(22) Anmeldetag: 03.08.2011
(51) Int. Cl.: F02B 37/013, F02B 37/18, F02B 39/00, F01D 25/14, F02F 1/24, F02F 1/40, F02B 37/00

(54) **Aufgeladene Brennkraftmaschine mit zwei Turbinen und Verfahren zum Betreiben einer derartigen Brennkraftmaschine**
Supercharged internal combustion engine equipped with two turbines and method to operate such an engine
Moteur à combustion interne chargé doté de deux turbines et procédé de fonctionnement d'un tel moteur à combustion interne

(43) Veröffentlichungstag der Anmeldung: 06.02.2013
(73) Patentinhaber: Ford Global Technologies, LLC, Dearborn, MI 48126 (US)
(72) Erfinder: Kuhlbach, Kai, 51427 Bergisch Gladbach (DE); Schorn, Norbert, 52080 Aachen (DE); Weber, Carsten, 51375 Leverkusen (DE)
(74) Vertreter: Illing, Rolf

(56) Entgegenhaltungen:
- EP-A1- 0 864 737
- EP-A1- 2 241 734
- WO-A1-2008/083769
- FR-A1- 2 945 577
- US-A1- 2007 169 479

## Beschreibung

Die Erfindung betrifft eine aufgeladene Brennkraftmaschine mit mindestens einem Zylinderkopf und mindestens zwei in Reihe angeordneten Turbinen, bei der
- der mindestens eine Zylinderkopf mindestens zwei Zylinder aufweist, wobei jeder Zylinder mindestens eine Auslaßöffnung zum Abführen der Abgase aus dem Zylinder aufweist und sich an jede Auslaßöffnung eine Abgasleitung anschließt, und bei der
- die Abgasleitungen von mindestens zwei Zylindern unter Ausbildung eines integrierten Abgaskrümmers innerhalb des Zylinderkopfes zu einer Gesamtabgasleitung zusammenführen, wobei stromabwärts des Abgaskrümmers zwei unterschiedlich große Turbinen in der Gesamtabgasleitung angeordnet sind.

Des Weiteren betrifft die Erfindung ein Verfahren zum Betreiben einer derartigen Brennkraftmaschine.

Im Rahmen der vorliegenden Erfindung umfaßt der Begriff Brennkraftmaschine insbesondere Ottomotoren, aber auch Dieselmotoren und Hybrid-Brennkraftmaschinen.

Eine Brennkraftmaschine der genannten Art verfügt über einen Zylinderblock und mindestens einen Zylinderkopf, die zur Ausbildung der mindestens zwei Zylinder an einer Montagefläche miteinander verbunden werden. Der Zylinderblock weist zur Aufnahme der Kolben bzw. der Zylinderrohre eine entsprechende Anzahl an Zylinderbohrungen auf. Die Kolben werden axial beweglich in den Zylinderrohren geführt und bilden zusammen mit den Zylinderrohren und dem Zylinderkopf die mindestens zwei Zylinder der Brennkraftmaschine aus.

Der mindestens eine Zylinderkopf dient üblicherweise zur Aufnahme des Ventiltriebs. Um den Ladungswechsel zu steuern, benötigt eine Brennkraftmaschine Steuerorgane, beispielsweise Hubventile, und Betätigungseinrichtungen zur Betätigung der Steuerorgane. Im Rahmen des Ladungswechsels erfolgt das Ausschieben der Verbrennungsgase über die Auslaßöffnungen und das Füllen des Brennraums, d. h. das Ansaugen des Frischgemisches bzw. der Ladeluft, über die Einlassöffnungen. Der für die Bewegung der Ventile erforderliche Ventilbetätigungsmechanismus einschließlich der Ventile selbst wird als Ventiltrieb bezeichnet.

Es ist die Aufgabe des Ventiltriebes die Einlaß- und Auslaßöffnungen der Zylinder rechtzeitig freizugeben bzw. zu verschließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung der Zylinder mit Frischgemisch bzw. ein effektives, d. h. vollständiges Abführen der Abgase zu gewährleisten. Daher werden die Zylinder auch häufig und zunehmend mit zwei oder mehr Einlaß- bzw. Auslaßöffnungen ausgestattet.

Die Abgasleitungen, die sich an die Auslaßöffnungen anschließen, sind nach dem Stand der Technik zumindest teilweise im Zylinderkopf integriert. Vorliegend werden die Abgasleitungen von mindestens zwei Zylindern unter Ausbildung mindestens eines integrierten Abgaskrümmers innerhalb des Zylinderkopfes zu einer Gesamtabgasleitung zusammengeführt. Die Zusammenführung von Abgasleitungen zu einer Gesamtabgasleitung wird im Allgemeinen und im Rahmen der vorliegenden Erfindung als Abgaskrümmer bezeichnet. Ein integrierter Krümmer ermöglicht eine sehr kompakte Bauweise der Brennkraftmaschine. Die Gesamtwegstrecke der Abgasleitungen des Krümmers verkürzt sich deutlich, wodurch sich weitere Vorteile ergeben, insbesondere hinsichtlich der Aufladung.

Stromabwärts des Abgaskrümmers werden die Abgase mindestens einer Turbine eines Abgasturboladers zugeführt.

Beim Einsatz eines Abgasturboladers ist man grundsätzlich bemüht, die Turbine des Laders möglichst motornah, d. h. nahe an den Auslaßöffnungen der Zylinder, anzuordnen, um auf diese Weise die Abgasenthalpie der heißen Abgase, die maßgeblich vom Abgasdruck und der Abgastemperatur bestimmt wird, optimal nutzen zu können und ein schnelles Ansprechverhalten des Turboladers zu gewährleisten. Zudem soll auch der Weg der heißen Abgase zu den verschiedenen Abgasnachbehandlungssystemen möglichst kurz sein, damit den Abgasen wenig Zeit zur Abkühlung eingeräumt wird und die Abgasnachbehandlungssysteme möglichst schnell ihre Betriebstemperatur bzw. Anspringtemperatur erreichen, insbesondere nach einem Kaltstart der Brennkraftmaschine.

Die thermische Trägheit des Teilstücks der Abgasleitungen zwischen Auslaßöffnung am Zylinder und Turbine bzw. zwischen Auslaßöffnung am Zylinder und Abgasnachbehandlungssystem sollte daher auch möglichst gering sein, was durch Reduzierung der Masse und der Länge der entsprechenden Teilstücke erreicht werden kann.

Um die genannten Ziele zu erreichen, ist es sinnvoll die Abgasleitungen - wie bei der erfindungsgemäßen Brennkraftmaschine - unter Ausbildung mindestens eines integrierten Abgaskrümmers innerhalb des Zylinderkopfes zusammenzuführen. Die Länge der Abgasleitungen wird durch die Integration in den Zylinderkopf verringert, wodurch nicht nur die thermische Trägheit des Abgassystems stromaufwärts einer in der Gesamtabgasleitung vorgesehenen Turbine verringert, sondern auch das Leitungsvolumen, d. h. das Abgasvolumen der Abgasleitungen, stromaufwärts der Turbine verkleinert wird. Dadurch verbessert sich das Ansprechverhalten der Turbine und die Enthalpie der Abgase am Eintritt in die Turbine erhöht sich.

Während sich eine einzelne Turbine durch Integration des Krümmers ohne weiteres motornah positionieren läßt, erweist es sich nach dem Stand der Technik als problematisch, mehrere Turbinen gleichzeitig motornah anzuordnen, wenn beispielsweise wie bei der Brennkraftmaschine, die Gegenstand der vorliegenden Erfindung ist, stromabwärts des integrierten Abgaskrümmers zwei in Reihe angeordnete Turbinen in der Gesamtabgasleitung vorgesehen sind.

Häufig werden aufgeladene Brennkraftmaschinen mit mehreren Abgasturboladern ausgestattet, um die Drehmomentcharakteristik der Brennkraftmaschine zu verbessern. Hintergrund dieser Maßnahme ist, dass bei Einsatz eines einzelnen Turboladers in der Regel ein starker Drehmomentabfall bei Unterschreiten einer bestimmten Drehzahl zu beobachten ist.

Verständlich wird dieser Drehmomentabfall, wenn berücksichtigt wird, dass das Ladedruckverhältnis vom Turbinendruckverhältnis abhängt. Wird beispielsweise bei einem Dieselmotor die Motordrehzahl verringert oder bei einem Ottomotor die Last oder Motordrehzahl reduziert, führt dies zu einem kleineren Abgasmassenstrom, der ein kleineres Turbinendruckverhältnis und damit ein kleineres Ladedruckverhältnis zur Folge hat. Dies kommt einem Drehmomentabfall gleich.

Grundsätzlich kann dem Abfall des Ladedruckes durch eine Verkleinerung des Turbinenquerschnittes entgegengewirkt werden. Überschreitet der Abgasmassenstrom eine kritische Größe wird zumindest ein Teil des Abgasstromes im Rahmen der sogenannten Abgasabblasung mittels einer Bypaßleitung an der Turbine vorbei geführt. Diese Vorgehensweise hat aber den Nachteil, dass das Aufladeverhalten bei höheren Drehzahlen unbefriedigend ist.

Daher kann es vorteilhaft sein, mehrere Turbinen vorzusehen. Durch das in Reihe Schalten von zwei Abgasturboladern, von denen ein Abgasturbolader als Hochdruckstufe und ein Abgasturbolader als Niederdruckstufe dient, kann das Verdichterkennfeld in vorteilhafter Weise aufgeweitet werden und zwar sowohl hin zu kleineren Verdichterströmen als auch hin zu größeren Verdichterströmen.

Insbesondere ist bei dem als Hochdruckstufe dienenden Abgasturbolader ein Verschieben der Pumpgrenze hin zu kleineren Verdichterströmen möglich, wodurch auch bei kleinen Verdichterströmen hohe Ladedruckverhältnisse erzielt werden können, was im unteren Teillastbereich die Drehmomentcharakteristik deutlich verbessert. Erreicht wird dies durch eine Auslegung der Hochdruckturbine auf kleine Abgasmassenströme und Vorsehen einer Bypaßleitung, mit der Abgas an der Hochdruckturbine vorbeigeführt werden kann. Die Bypaßleitung zweigt hierzu stromaufwärts der Hochdruckturbine, die im Folgenden auch als kleine Turbine bezeichnet wird, von der Gesamtabgasleitung ab und mündet stromabwärts dieser kleinen Turbine und stromaufwärts der Niederdruckturbine, die im Folgenden auch als große Turbine bezeichnet wird, wieder in die Gesamtabgasleitung, wobei vorzugsweise ein Steuerelement vorgesehen wird, um den an der Hochdruckturbine vorbeigeführten Abgasstrom zu steuern.

Zwei in Reihe geschaltete Abgasturbolader bieten darüber hinaus noch weitere Vorteile. Die Leistungssteigerung durch Aufladung kann weiter erhöht werden. Des Weiteren ist das Ansprechverhalten einer derartig aufgeladenen Brennkraftmaschine - insbesondere im Teillastbereich - deutlich verbessert gegenüber einer vergleichbaren Brennkraftmaschine mit einstufiger Aufladung. Der Grund hierfür ist darin zu finden, dass sich das Laufzeug eines kleiner dimensionierten Abgasturboladers schneller beschleunigen läßt und die kleinere Hochdruckstufe daher weniger träge ist als ein im Rahmen einer einstufigen Aufladung verwendeter größerer Abgasturbolader.

Ist im Rahmen der vorliegenden Erfindung von zwei in Reihe geschalteten Abgasturboladern die Rede, bedeutet dies, dass die beiden zugehörigen Turbinen in Reihe geschaltet sind. Die Verdichter sind vorzugsweise auch in Reihe geschaltet, können aber auch parallel angeordnet sein. Bei in Reihe angeordneten Turbinen erweist es sich, wie bereits ausgeführt wurde, als problematisch, beide Turbinen motornah anzuordnen.

Bei aus dem Stand der Technik bekannten Konzepten mit zwei Abgasturboladern wird der Abgasstrom außerhalb des Zylinderkopfes der kleinen Hochdruckturbine zugeführt und anschließend einer weiter stromabwärts im Abgassystem angeordneten Niederdruckturbine. Die Wegstrecke der Gesamtabgasleitung bis hin zu dieser zweiten Turbine ist vergleichsweise lang. Den Turbinen bzw. den Turbinengehäusen und Leitungen muß zudem der erforderliche Bauraum bereitgestellt werden. Nach dem Stand der Technik ist es nicht möglich, beide Turbinen in Reihe und gleichzeitig motornah anzuordnen.

Ein weiteres Problem stellen die hohen Herstellungskosten für die Turbinen dar, die infolge des erhöhten Materialbedarfs bei mehreren Turbinen zusätzlich steigen. Der für das thermisch hochbelastete Turbinengehäuse verwendete - häufig nickelhaltige - Werkstoff ist vergleichsweise kostenintensiv, insbesondere im Vergleich zu dem für den Zylinderkopf bevorzugt verwendeten Werkstoff; beispielweise Aluminium. Nicht nur die Werkstoffkosten an sich, sondern auch die Kosten für die Bearbeitung dieser für das Turbinengehäuse verwendeten Werkstoffe sind vergleichsweise hoch.

Im Hinblick auf die Kosten wäre es vorteilhaft, weniger kostenintensive Werkstoffe, beispielsweise Aluminium, zu verwenden. Die Verwendung von Aluminium wäre auch im Hinblick auf das Gewicht der Turbine vorteilhaft.

Um kostengünstigere Werkstoffe für die Herstellung der Turbine verwenden zu können, wird die Turbine nach dem Stand der Technik mit einer Kühlung, beispielsweise mit einer Flüssigkeitskühlung, ausgestattet, welche die thermische Belastung der Turbine bzw. des Turbinengehäuses durch die heißen Abgase stark vermindert und damit den Einsatz thermisch weniger belastbarer Werkstoffe ermöglicht.

In der Regel wird das Turbinengehäuse zur Ausbildung der Kühlung mit einem Kühlmittelmantel versehen. Aus dem Stand der Technik sind sowohl Konzepte bekannt, bei denen das Gehäuse ein Gussteil ist und der Kühlmittelmantel im Rahmen des Gießvorganges als integraler Bestandteil eines monolithischen Gehäuses ausgebildet wird, als auch Konzepte, bei denen das Gehäuse modular aufgebaut ist, wobei im Rahmen des Zusammenbaus ein Hohlraum ausgebildet wird, der als Kühlmittelmantel dient.

Eine entsprechend dem letztgenannten Konzept gestaltete Turbine beschreibt beispielsweise die deutsche Offenlegungsschrift DE 10 2008 011 257 A1. Eine Flüssigkeitskühlung der Turbine wird dadurch ausgebildet, dass das eigentliche Turbinengehäuse mit einer Verschalung versehen wird, so dass sich zwischen dem Gehäuse und dem mindestens einen beabstandet angeordneten Schalungselement ein Hohlraum ausbildet, in den Kühlmittel eingeleitet werden kann. Das durch die Verschalung erweiterte Gehäuse umfaßt dann den Kühlmittelmantel.

Die EP 1 384 857 A2 offenbart ebenfalls eine Turbine, deren Gehäuse mit einem Kühlmittelmantel ausgestattet ist.

Die DE 10 2007 017 973 A1 beschreibt einen Bausatz zur Ausbildung einer dampfgekühlten Turbinenummantelung.

Die EP 2 241 734 A1 beschreibt ein Konzept mit zwei unterschiedlich großen Turbinen, die parallel und beide motornah angeordnet sind. Das Gehäuse der größeren Turbine ist zur Ausbildung einer Flüssigkeitskühlung mit mindestens einem Kühlmittelmantel ausgestattet.

Die US 2007/169479 A1 beschreibt eine aufgeladene Brennkraftmaschine der eingangs genannten Art mit einem Zylinderkopf und zwei in Reihe angeordneten Turbinen.

Aufgrund der hohen spezifischen Wärmekapazität einer Flüssigkeit, insbesondere des üblicherweise eingesetzten Wassers, können dem Gehäuse mittels Flüssigkeitskühlung große Wärmemengen entzogen werden. Die Wärme wird im Inneren des Gehäuses an das Kühlmittel abgegeben und mit dem Kühlmittel abgeführt. Die an das Kühlmittel abgegebene Wärme wird in einem Wärmetauscher dem Kühlmittel wieder entzogen.

Grundsätzlich besteht die Möglichkeit, die Flüssigkeitskühlung der Turbine mit einem separaten Wärmetauscher auszustatten oder aber - bei einer flüssigkeitsgekühlten Brennkraftmaschine - den Wärmetauscher der Motorkühlung, d. h. den Wärmetauscher einer anderen Flüssigkeitskühlung, hierfür zu nutzen. Letzteres erfordert lediglich entsprechende Verbindungen beider Kreisläufe.

Zu berücksichtigen ist in diesem Zusammenhang aber, dass die in der Turbine vom Kühlmittel aufzunehmende Wärmemenge 40kW oder mehr betragen kann, wenn zur Herstellung des Gehäuses thermisch wenig belastbare Materialien wie Aluminium verwendet werden. Dem Kühlmittel eine derart hohe Wärmemenge im Wärmetauscher zu entziehen und mittels Luftströmung an die Umgebung abzuführen, erweist sich als problematisch und im Einzelfall als nicht realisierbar.

Der Kühlkreislauf der Brennkraftmaschine müßte auf den stark erhöhten Bedarf zur Wärmeabfuhr ausgelegt werden, d. h. der Wärmetauscher müßte erheblich größer dimensioniert werden. Dem steht das beschränkte Platzangebot im Front-End-Bereich des Fahrzeuges, wo die verschiedenen Wärmetauscher in der Regel angeordnet werden, entgegen. Zudem müßte ein leistungsstarker Lüfter vorgesehen werden, um den Wärmeübergang am Wärmetaucher zu erhöhen.

Der Einsatz thermisch weniger belastbarer und damit kostengünstigerer Werkstoffe macht - wie dargelegt - eine Vielzahl an Modifikationen erforderlich, die wiederum Kosten verursachen. Insofern mündet die beschriebene Vorgehensweise in einem Konflikt der Art, dass die Kostenersparnis, die durch einen Materialwechsel bei den Turbinen erzielt wurde, durch die erhöhten Kosten einer leistungsfähigeren Kühlung wieder aufgezehrt wird.

Vor dem Hintergrund des oben Gesagten ist es eine Aufgabe der vorliegenden Erfindung, eine aufgeladene Brennkraftmaschine gemäß dem Oberbegriff des Anspruchs 1 bereitzustellen, die den oben genannten Zielsetzungen Rechnung trägt, insbesondere im Vergleich zum Stand der Technik kostengünstiger ist und bei der beide Turbinen motornah angeordnet werden können.

Eine weitere Teilaufgabe der vorliegenden Erfindung ist es, ein Verfahren zum Betreiben einer derartigen Brennkraftmaschine aufzuzeigen.

Gelöst wird die erste Aufgabe durch eine aufgeladene Brennkraftmaschine mit mindestens einem Zylinderkopf und mindestens zwei in Reihe angeordneten Turbinen, bei der der mindestens eine Zylinderkopf mindestens zwei Zylinder aufweist, wobei jeder Zylinder mindestens eine Auslaßöffnung zum Abführen der Abgase aus dem Zylinder aufweist und sich an jede Auslaßöffnung eine Abgasleitung anschließt, und bei der
- die Abgasleitungen von mindestens zwei Zylindern unter Ausbildung eines integrierten Abgaskrümmers innerhalb des Zylinderkopfes zu einer Gesamtabgasleitung zusammenführen, wobei stromabwärts des Abgaskrümmers zwei unterschiedlich große Turbinen in der Gesamtabgasleitung angeordnet sind,
   und die dadurch gekennzeichnet ist, dass
   - die Gesamtabgasleitung stromabwärts des Krümmers in ein Verteilergehäuse eintritt, durch dieses Verteilergehäuse hindurch und zu der kleinen Turbine führt, wobei von dem Verteilergehäuse aus das Abgas auf die zwei unterschiedlich großen Turbinen verteilbar ist,
   - das erste Turbinengehäuse, welches die kleine Turbine aufnimmt, zur Ausbildung einer Flüssigkeitskühlung mit mindestens einem Kühlmittelmantel ausgestattet ist, und
   - das zweite Turbinengehäuse, welches die große Turbine aufnimmt, nicht mit einer Flüssigkeitskühlung ausgestattet ist.

Vorteilhaft sind Ausführungsformen, bei denen das Verteilergehäuse ein Steuerelement umfaßt, das in einer Offenstellung eine die kleine Turbine umgehende Bypaßleitung freigibt und in einer Schließstellung diese Bypaßleitung versperrt, wobei die Bypaßleitung stromaufwärts der großen Turbine in die Gesamtabgasleitung einmündet.

Erfindungsgemäß wird das Abgas außerhalb des mindestens einen Zylinderkopfes nicht unmittelbar der kleinen Hochdruckturbine zugeführt, sondern vielmehr einem Verteilergehäuse, von dem aus das Abgas sowohl direkt der kleinen Hochdruckturbine als auch - bei Umgehung der Hochdruckturbine - via Bypaßleitung direkt der großen Niederdruckturbine zugeführt werden kann, wenn die kleine Turbine durch Öffnen des Steuerelementes abgeschaltet wird. Die Verwendung eines Verteilergehäuses gestattet auf diese Weise die motornahe Anordnung beider Turbinen.

Im Rahmen der vorliegenden Erfindung wird an den Bezeichnungen Hochdruckturbine und Niederdruckturbine festgehalten und zwar auch dann, wenn die kleine Hochdruckturbine durch Öffnen des Steuerelementes abgeschaltet und das Abgas direkt der Niederdruckturbine zugeführt wird, d. h. nur eine Stufe der Abgasturboaufladung aktiv ist.

Das zweite Turbinengehäuse, welches die große Turbine aufnimmt, ist erfindungsgemäß nicht mit einer Flüssigkeitskühlung ausgestattet. Die Wärmemenge, die bei großen Abgasmengen in der Niederdruckturbine anfallen würde, mittels Flüssigkeitskühlung abzuführen, würde ein entsprechendes, d. h. gegenüber einer konventionellen Brennkraftmaschine modifiziertes Kühlsystem erforderlich machen, weshalb es vorteilhaft ist, bei der zweiten Turbine auf die Ausstattung mit einer Flüssigkeitskühlung zu verzichten. Für die Herstellung des Gehäuses der großen Turbine wird dann wegen der fehlenden Kühlung ein thermisch stärker belastbarer Werkstoff verwendet.

Vorteilhaft sind dabei Ausführungsformen, bei denen die Turbinengehäuse der beiden Turbinen auf gegenüberliegenden Seiten des Verteilergehäuses angeordnet sind, beispielsweise das Gehäuse der großen Turbine auf der Seite des Verteilergehäuses, die dem Zylinderblock zugewandt ist, und die kleine Turbine, d. h. das erste Turbinengehäuse, auf der gegenüberliegenden, dem Zylinderblock abgewandten Seite des Verteilergehäuses.

Als besonders vorteilhaft erweist sich die erfindungsgemäße Brennkraftmaschine in Betriebszuständen, in denen die kleine Turbine durch Öffnen des Steuerelements deaktiviert, d. h. abgeschaltet wird, und das Abgas bei Umgehung der kleinen Turbine via Bypaßleitung direkt der großen Turbine zugeführt wird. Aufgrund der Verwendung eines Verteilergehäuses ist die Wegstrecke der Gesamtabgasleitung bis hin zu der großen Turbine bei abgeschalteter Hochdruckturbine vergleichsweise kurz. Dazu trägt insbesondere die im Verteilergehäuse integrierte Bypaßleitung bei. Durch Öffnen der Bypaßleitung wird die kleine Turbine deaktiviert und der Krümmer wird mit dem Eintrittsbereich in die Niederdruckturbine kurzgeschlossen.

Bei kleinen Abgasmengen, d. h. niedrigen Drehzahlen bzw. geringen Lasten, durchströmt das Abgas vorzugsweise beide Turbinen, d. h. das gesamte Abgas wird bei geschlossener Bypaßleitung, d. h. einem in der Schließstellung befindlichen Steuerelement, zunächst der kleinen Turbine zugeführt, um den gewünschten Ladedruck zu generieren. Stromabwärts der kleinen Turbine wird der Abgasstrom dann durch die große Niederdruckturbine geleitet. Dabei steht nicht die Partizipation der Niederdruckturbine bei der Erzeugung des Ladedrucks im Vordergrund. Vielmehr ist es beabsichtigt, die Drehbewegung des Laufrades der großen Turbine aufrecht zu erhalten. Dadurch wird das Ansprechverhalten der Abgasturboaufladung verbessert, da das Laufzeug der großen Turbine bereits eine Drehbewegung aufweist, wenn zu größeren Abgasmengen hin die Niederdruckturbine zunehmend zur Generierung des Ladedrucks herangezogen wird und das Laufrad zu beschleunigen ist.

Mit zunehmender Abgasmenge, d. h. steigender Drehzahl bzw. Last, erfolgt das Abschalten der kleinen Turbine durch Öffnen der Bypaßleitung. Das Abgas durchströmt dann bei geöffneter Bypaßleitung, d. h. einem in der Offenstellung befindlichen Steuerelement, vorzugsweise nur die große Turbine. In diesem Schaltungszustand durchströmt unter Umständen bzw. ohne weitere Maßnahmen gegebenenfalls ein Restabgasstrom auch die kleine Turbine und hält das Laufrad in Drehung. Nichtsdestotrotz wird im Rahmen der vorliegenden Erfindung die kleine Turbine auch dann als abgeschaltet bezeichnet.

Vorteilhaft sind aber Ausführungsformen, bei denen das in der Offenstellung befindliche Steuerelement die Gesamtabgasleitung stromabwärts der kleinen Turbine versperrt bzw. verschließt.

Das Steuerelement kann aber auch zur beliebigen Aufteilung des Abgasstroms auf die beiden Turbinen verwendet werden. Hierzu ist das Steuerelement vorzugsweise stufenlos verstellbar, wobei es eine Variation der den beiden Turbinen zugeführten Teilabgasströme gestattet. Die Anordnung des Steuerelementes im Verteilergehäuse ist vorteilhaft, weil kein zusätzlicher Bauraum für das Steuerelement im Motorraum beansprucht wird. Die Integration des Steuerelements in das Gehäuse ermöglicht den Einsatz eines Steuerelements ohne zusätzlichen Raumbedarf.

Die Auswahl der Werkstoffe zur Herstellung der Turbinengehäuse bzw. die Ausstattung der Turbinen mit einer Kühlung oder aber das Weglassen einer Kühlung erfolgt erfindungsgemäß in einer geeigneten Art, die mit dem vorstehend beschriebenen Betrieb der Brennkraftmaschine korrespondiert, und im Hinblick auf die zu lösende Aufgabe.

Erfindungsgemäß ist das erste Turbinengehäuse, welches die kleine Turbine aufnimmt, zur Ausbildung einer Flüssigkeitskühlung mit mindestens einem Kühlmittelmantel ausgestattet. Die Flüssigkeitskühlung vermindert die thermische Belastung der Turbine bzw. des Turbinengehäuses durch die heißen Abgase stark, so dass kostengünstige Werkstoffe für die Herstellung des ersten Turbinengehäuses verwendet werden können. Die dabei mittels Kühlmittel aus dem Gehäuse abzuführenden Wärmemengen können in der Regel mit der vorhandenen Flüssigkeitskühlung der Brennkraftmaschine bewältigt werden, da durch die kleine Turbine nur geringe Abgasmengen strömen, welche das dazugehörige Gehäuse thermisch weniger stark belasten, bzw. die kleine Turbine nur bei kleinen Abgasmengen zugeschaltet und mit heißem Abgas beaufschlagt wird. Die abzuführenden Wärmemengen sind entsprechend den geringen Abgasmengen klein.

Die Flüssigkeitskühlung der kleinen Turbine ermöglicht die freie Materialwahl und damit den Einsatz kostengünstiger Werkstoffe von geringem Gewicht.

Mit der erfindungsgemäßen Brennkraftmaschine wird - wie dargelegt - die erste der Erfindung zugrunde liegende Aufgabe gelöst, nämlich eine aufgeladene Brennkraftmaschine bereitgestellt, die im Vergleich zum Stand der Technik kostengünstiger ist und bei der beide Turbinen motornah angeordnet werden können.

Der mindestens eine Zylinderkopf der erfindungsgemäßen Brennkraftmaschine weist mindestens einen integrierten Abgaskrümmer auf, d. h. gegebenenfalls auch zwei oder drei integrierte Krümmer.

Ausführungsformen des Zylinderkopfes mit beispielsweise vier in Reihe angeordneten Zylindern, bei denen die Abgasleitungen der außenliegenden Zylinder und die Abgasleitungen der innenliegenden Zylinder jeweils zu einer Gesamtabgasleitung zusammengeführt werden, sind ebenfalls erfindungsgemäße Zylinderköpfe. Ebenso Ausführungsformen, bei denen die Abgasleitungen der innenliegenden Zylinder unter Ausbildung eines integrierten Abgaskrümmers innerhalb des Zylinderkopfes zu einer Gesamtabgasleitung zusammenführen und die außenliegenden Zylinder jeweils mit einer einzelnen separaten Abgasleitung ausgestattet sind. Ebenso Ausführungsformen, bei denen jeweils die Abgasleitungen eines außenliegenden Zylinders mit den Abgasleitungen des benachbarten innenliegenden Zylinders unter Ausbildung eines integrierten Abgaskrümmers innerhalb des Zylinderkopfes zu einer Gesamtabgasleitung zusammenführen, wobei die beiden auf diese Weise ausgebildeten integrierten Abgaskrümmer den Zylinderkopf durch zwei Austrittsöffnungen verlassen.

Vorteilhaft sind auch Ausführungsformen, bei denen die Abgasleitungen sämtlicher Zylinder des Zylinderkopfes innerhalb des Zylinderkopfes zu einer einzigen, d. h. gemeinsamen Gesamtabgasleitung zusammengeführt werden.

Weitere vorteilhafte Ausführungsformen der Brennkraftmaschine werden im Folgenden erörtert.

Vorteilhaft sind Ausführungsformen der Brennkraftmaschine, bei denen zumindest Teile des Verteilergehäuses und Teile des ersten Turbinengehäuses integral ausgebildet sind und ein monolithisches Bauteil bilden.

Vorteilhaft sind insbesondere Ausführungsformen der Brennkraftmaschine, bei denen das Verteilergehäuse und das erste Turbinengehäuse integral ausgebildet sind und ein monolithisches Bauteil bilden.

Prinzipbedingt entfällt durch die einteilige Ausbildung die Notwendigkeit einer gasdichten, thermisch hochbelastbaren und kostenintensiven Verbindung von Verteilergehäuse und Turbinengehäuse, was Kostenvorteile bietet. Es besteht auch nicht die Gefahr, dass Abgas infolge einer Leckage ungewollt in die Umgebung austritt.

Es kann eine besonders motornahe Anordnung der ersten Turbine realisiert werden, weil ein Zugriff für Montagewerkzeuge nicht mehr vorgesehen werden muß, was die konstruktive Auslegung sowohl des Turbinengehäuses als auch des Verteilergehäuses vereinfacht und eine Optimierung hinsichtlich des Betriebs der Turbine gestattet. Die beiden Gehäuse können vergleichsweise kleinvolumig ausgebildet und das Laufrad der kleinen Turbine kann in der Nähe zum Eintrittsbereich bzw. zum Krümmer angeordnet werden, was bei Berücksichtigung eines Montagezugriffs nicht ohne weiteres möglich ist.

Sind das Turbinengehäuse und das Verteilergehäuse flüssigkeitsgekühlt und soll der im Turbinengehäuse integrierte Kühlmittelmantel mit dem Kühlmittelmantel des Verteilergehäuses verbunden und gegebenenfalls via Verteilergehäuse mit Kühlmittel versorgt werden, ist ein Verbinden der beiden Kühlkreisläufe bzw. Kühlmittelmäntel mittels externer Leitungen aufgrund der zumindest teilweisen integralen Ausbildung der Gehäuse nicht mehr erforderlich.

Dabei kann auch ein im Verteilergehäuse integrierter Kühlmittelmantel den im Gehäuse vorgesehenen Kühlmittelmantel mit ausbilden, so dass eine Verbindung von zwei originär unabhängigen Kühlmänteln im eigentlichen Sinne nicht mehr vorliegt bzw. nicht mehr auszubilden ist. Bezüglich der Kühlmittelkreisläufe bzw. dem Verbinden der Kühlmittelmäntel und der Leckage von Kühlmittel gilt das im Hinblick auf den Abgasstrom bereits Gesagte in analoger Weise. Des Weiteren führt die Integration der Leitung zu einer Verringerung der Anzahl an Bauteilen und zu einer kompakteren Bauweise. Die Montagezeit verkürzt sich erheblich.

Vorteilhafterweise wird das monolithische Bauteil als gegossenes Bauteil ausgebildet, vorzugsweise aus Aluminium, wodurch eine besonders hohe Gewichtsersparnis erzielt wird im Vergleich zur Verwendung von Stahl. Die Kosten für die Bearbeitung des Aluminiumgehäuses sind ebenfalls geringer.

Nichtsdestotrotz kann das monolithische Bauteil auch aus Grauguß oder anderen Gußmaterialien hergestellt werden. Denn unabhängig vom verwendeten Material bleiben die Vorteile eines monolithisch ausgebildeten Bauteils gemäß der in Rede stehenden Ausführungsform erhalten, beispielsweise die kompakte Bauweise, die Gewichts- und Bauraumersparnis durch den Wegfall der nicht notwendigen Verbindungen und Verbindungselemente.

Vorteilhaft sind Ausführungsformen der Brennkraftmaschine, bei denen das Verteilergehäuse und das erste Turbinengehäuse separate Bauteile sind, welche kraftschlüssig, formschlüssig und/oder stoffschlüssig miteinander verbunden sind.

Ein modularer Aufbau, bei dem die erste Turbine bzw. das erste Turbinengehäuse und das Verteilergehäuse separate Bauteile darstellen und im Rahmen der Montage miteinander verbunden werden, hat den Vorteil, dass einerseits die. Turbine mit anderen Verteilergehäusen und andererseits das Verteilergehäuse mit anderen Turbinen nach dem Baukastenprinzip kombiniert werden können. Die vielfältige Einsetzbarkeit eines Bauteils erhöht in der Regel die Stückzahl, wodurch die Stückkosten gesenkt werden. Zudem werden die Kosten gesenkt, die entstehen, wenn die Turbine bzw. das Verteilergehäuse infolge eines Defekts auszutauschen, d. h. zu ersetzen ist.

Zudem eröffnet ein modularer Aufbau den Einsatz unterschiedlicher Werkstoffe für die beiden Gehäuse, wodurch einer unterschiedlich hohen thermischen Belastung der Gehäuse Rechnung getragen werden kann. Von hoher Relevanz ist dies insbesondere, wenn nur eines der beiden Gehäuse mit einer Flüssigkeitskühlung ausgestattet ist.

Falls die Flüssigkeitskühlung des Turbinengehäuses den ersten Gehäuseteil, welcher die kleinere Turbine aufnimmt, nicht in dem Maße kühlt, dass auf den Einsatz thermisch hochbelastbarer Werkstoffe zur Herstellung dieses Gehäuseteils verzichtet werden kann, besteht aufgrund der modularen Bauweise die Möglichkeit, zumindest den zweiten größeren Gehäuseteil aus einem thermisch weniger belastbaren und damit kostengünstigeren Werkstoff zu fertigen.

Vorteilhaft sind Ausführungsformen der Brennkraftmaschine, bei denen das Verteilergehäuse zur Ausbildung einer Flüssigkeitskühlung mit mindestens einem Kühlmittelmantel ausgestattet ist.

Die Flüssigkeitskühlung vermindert die thermische Belastung des Verteilergehäuses, so dass kostengünstige Werkstoffe für die Herstellung des Verteilergehäuses verwendet werden können.

Auch die thermische Belastung des Steuerelementes wird durch die Flüssigkeitskühlung des Verteilergehäuses gemindert, so dass auf die Verwendung kostenintensiver wärmebeständiger Werkstoffe zur Ausbildung des Steuerelements ebenfalls verzichtet werden kann. Die Reduzierung der thermischen Belastung verringert zudem die Störanfälligkeit des Steuerelementes, beispielweise das Klemmen einer als Steuerelement dienenden Klappe.

Vorteilhaft sind in diesem Zusammenhang Ausführungsformen der Brennkraftmaschine, bei denen der mindestens eine Kühlmittelmantel des Verteilergehäuses mit dem mindestens einen Kühlmittelmantel des ersten Turbinengehäuses in Verbindung steht.

Ein Verbinden der beiden Kühlmittelkreisläufe bzw. Kühlmittelmantel gestattet es, beide Kreisläufe mit einer gemeinsamen Pumpe und einem gemeinsamen Wärmetauscher auszustatten und auf diese Weise die Anzahl der Bauteile zu reduzieren und die Kosten zu senken. Es wird Bezug genommen auf die bereits oben gemachten Ausführungen betreffend das Zusammenwirken von Verteilergehäuse und erstem Turbinengehäuse.

Vorteilhaft sind Ausführungsformen der Brennkraftmaschine, bei denen die Gesamtabgasleitung stromabwärts der kleinen Turbine erneut in das Verteilergehäuse eintritt, durch dieses Verteilergehäuse hindurch und zu der großen Turbine führt. Diese Maßnahme unterstützt die Realisierung einer kompakten Bauweise und insbesondere die Integration der Bypaßleitung in das Verteilergehäuse gemäß der nachstehenden Ausführungsform.

Vorteilhaft sind nämlich Ausführungsformen der Brennkraftmaschine, bei denen die Bypaßleitung vollständig in das Verteilergehäuse integriert ist. Auch diese Maßnahme unterstützt die Realisierung einer kompakten Bauweise und gewährleistet kurze Leitungen, was die Gesamtwegstrecke der Abgasleitungen, zu denen auch die Bypaßleitung zählt, weiter verkürzt. Durch die Integration der Bypaßleitung entfällt die Notwendigkeit, eine gasdichte, thermisch hochbelastbare und damit kostenintensive Verbindung zwischen Bypaßleitung und Gesamtabgasleitung auszubilden. Dies führt zu Kostenvorteilen und eliminiert die Gefahr, dass Abgas infolge einer Leckage ungewollt in die Umgebung austritt.

Vorteilhaft sind Ausführungsformen der Brennkraftmaschine, bei denen das Steuerelement ein Ventil, ein Schieber, eine Klappe oder dergleichen ist.

Vorteilhaft sind insbesondere Ausführungsformen der Brennkraftmaschine, bei denen das Steuerelement eine verschwenkbare Klappe ist.

Hinsichtlich des Steuerelementes können Ausführungsformen vorteilhaft sein, bei denen das Steuerelement elektrisch, hydraulisch, pneumatisch, mechanisch oder magnetisch steuerbar ist, beispielsweise mittels der Motorsteuerung der Brennkraftmaschine oder aber mittels Ladedruckregelung.

Vorteilhaft sind Ausführungsformen, bei denen das Steuerelement zweistufig schaltbar ausgeführt ist, was die Steuerung vereinfacht und insbesondere Kostenvorteile bietet. Dabei wird das Steuerelement ausgehend von der Schließstellung, in der es die Bypaßleitung versperrt, in die Offenstellung überführt, um die kleine Turbine durch Freigeben der Bypaßleitung abzuschalten.

Um einen sprunghaften Drehmomentabfall bzw. Drehmomentanstieg bei Betätigen des Steuerelements zu vermeiden, ist ein stufenloses Schalten bzw. Umschalten zu bevorzugen. Vorteilhaft sind daher auch Ausführungsformen, bei denen das Steuerelement stufenlos verstellbar ist.

Vorteilhaft sind Ausführungsformen der Brennkraftmaschine, bei denen eine zweite Bypaßleitung vorgesehen ist, die stromaufwärts der großen Turbine aus der Gesamtabgasleitung abzweigt. Mittels der zweiten Bypaßleitung kann Abgas an der großen Turbine vorbeigeführt werden. Dies ermöglicht ein Auslegen der Turbine auf mittelgroße Abgasmengen, wodurch die Drehmomentcharakteristik im oberen Teillastbereich verbessert wird. In den Betriebszuständen, in denen die maximalen Abgasmengen auftreten, wird dann ein Teil des Abgases abgeblasen.

Vorteilhaft sind in diesem Zusammenhang Ausführungsformen der Brennkraftmaschine, bei denen die zweite Bypaßleitung innerhalb des Verteilergehäuses aus der Gesamtabgasleitung abzweigt. Dies ermöglicht ein Anordnen eines Absperrelements im bzw. am Verteilergehäuse.

Vorteilhaft sind nämlich Ausführungsformen der Brennkraftmaschine, bei denen ein Absperrelement vorgesehen ist, das die zweite Bypaßleitung in einer Offenstellung freigibt und in einer Schließstellung versperrt.

Vorteilhaft sind Ausführungsformen der Brennkraftmaschine, bei denen das erste Turbinengehäuse und das zweite Turbinengehäuse aus unterschiedlichen Werkstoffen gefertigt sind. Diese Ausführung trägt dem Umstand Rechnung, dass das erste Turbinengehäuse erfindungsgemäß mit mindestens einem Kühlmittelmantel ausgestattet ist, wohingegen die große Turbine vorzugsweise keine Flüssigkeitskühlung aufweist.

Vorteilhaft sind Ausführungsformen der Brennkraftmaschine, bei denen der mindestens eine Zylinderkopf mit einem Kühlmittelmantel ausgestattet ist.

Der erfindungsgemäße Zylinderkopf verfügt über einen integrierten Abgaskrümmer und ist daher thermisch höher belastet als ein herkömmlicher Zylinderkopf, der mit einem externen Krümmer ausgestattet ist, weshalb höhere Anforderungen an die Kühlung gestellt werden. Zudem ist eine Flüssigkeitskühlung des Zylinderkopfes auch deshalb vorteilhaft, weil der Zylinderkopf einer aufgeladenen Brennkraftmaschine thermisch höher belastet ist als der Zylinderkopf eines herkömmlichen Saugmotors.

Grundsätzlich besteht die Möglichkeit, die Kühlung in Gestalt einer Luftkühlung oder einer Flüssigkeitskühlung auszuführen. Aufgrund der wesentlich höheren Wärmekapazität von Flüssigkeiten gegenüber Luft können mit der Flüssigkeitskühlung wesentlich größere Wärmemengen abgeführt werden als dies mit einer Luftkühlung möglich ist.

Die Flüssigkeitskühlung erfordert die Ausstattung des Zylinderkopfes mit einem Kühlmittelmantel, d. h. die Anordnung von das Kühlmittel durch den Zylinderkopf führenden Kühlmittelkanälen. Die Wärme wird bereits im Inneren des Zylinderkopfes an das Kühlmittel, in der Regel mit Additiven versetztes Wasser, abgegeben. Das Kühlmittel wird dabei mittels einer im Kühlkreislauf angeordneten Pumpe gefördert, so dass es im Kühlmittelmantel zirkuliert. Die an das Kühlmittel abgegebene Wärme wird auf diese Weise aus dem Inneren des Zylinderkopfes abgeführt und in einem Wärmetauscher dem Kühlmittel wieder entzogen.

Weist der mindestens eine Zylinderkopf einen Kühlmittelmantel auf, sind Ausführungsformen vorteilhaft, bei denen der mindestens eine Kühlmittelmantel des Turbinengehäuses und/oder der mindestens eine Kühlmittelmantel des Verteilergehäuses mit dem im Zylinderkopf integrierten Kühlmittelmantel verbunden sind.

Vorteilhaft sind Ausführungsformen der Brennkraftmaschine, bei denen jeder Zylinder mindestens zwei Auslaßöffnungen zum Abführen der Abgase aus dem Zylinder aufweist. Wie bereits erwähnt, ist es während des Ausschiebens der Abgase im Rahmen des Ladungswechsels ein vorrangiges Ziel, möglichst schnell möglichst große Strömungsquerschnitte freizugeben, um ein effektives Abführen der Abgase zu gewährleisten, weshalb das Vorsehen von mehr als einer Auslaßöffnung vorteilhaft ist.

Vorteilhaft sind dabei Ausführungsformen, bei denen zunächst die Abgasleitungen der mindestens zwei Auslaßöffnungen jedes Zylinders zu einer dem Zylinder zugehörigen Teilabgasleitung zusammenführen bevor die Teilabgasleitungen von mindestens zwei Zylindern zu der Gesamtabgasleitung zusammenführen.

Die Gesamtwegstrecke aller Abgasleitungen wird hierdurch verkürzt. Das stufenweise Zusammenführen der Abgasleitungen zu einer Gesamtabgasleitung trägt zudem zu einer kompakteren, d. h. weniger voluminösen, Bauweise des Zylinderkopfes und damit insbesondere zu einer Gewichtsreduzierung und einem effektiveren Packaging im Motorraum bei.

Vorteilhaft können aber auch Ausführungsformen, bei denen jeder Zylinder eine Auslaßöffnung zum Abführen der Abgase aus dem Zylinder aufweist.

Jede der beiden eingesetzten Turbinen kann mit einer variablen Turbinengeometrie ausgestattet werden, die eine weitgehende Anpassung an den jeweiligen Betriebspunkt der Brennkraftmaschine durch Verstellen der Turbinengeometrie bzw. des wirksamen Turbinenquerschnittes gestattet. Dabei sind stromaufwärts des Laufrades der Turbine Leitschaufeln zur Beeinflussung der Strömungsrichtung angeordnet. Im Gegensatz zu den Laufschaufeln des umlaufenden Laufrades rotieren die Leitschaufeln nicht mit der Welle der Turbine, d. h. dem Laufrad. Die Leitschaufeln sind zwar stationär angeordnet, aber nicht völlig unbeweglich, sondern um ihre Achse drehbar, so dass auf die Anströmung der Laufschaufeln Einfluß genommen werden kann.

Verfügt eine Turbine hingegen über eine feste unveränderliche Geometrie, sind die Leitschaufeln nicht nur stationär, sondern zudem völlig unbeweglich, d. h. starr, fixiert.

Die zweite der Erfindung zugrunde liegende Teilaufgabe, nämlich ein Verfahren zum Betreiben einer Brennkraftmaschine einer zuvor beschriebenen Art aufzuzeigen, wird gelöst durch ein Verfahren, bei dem ausgehend von einem bei geringen Abgasmengen in der Schließstellung befindlichen Steuerelement die Bypaßleitung durch Öffnen des Steuerelements freigegeben wird, sobald die Abgasmenge eine vorgebbare Abgasmenge überschreitet.

Das im Zusammenhang mit der erfindungsgemäßen Brennkraftmaschine Gesagte gilt ebenfalls für das erfindungsgemäße Verfahren.

Verwendet die erfindungsgemäße Brennkraftmaschine eine Quantitätsregelung, bei der die Last über die Menge an Frischgemisch gesteuert wird, bedeutet die erfindungsgemäße Vorgehensweise beim Betreiben dieser Brennkraftmaschine, dass die Bypaßleitung durch Öffnen des Steuerelements freigegeben wird, wenn - eine konstante Drehzahl vorausgesetzt - die Last der Brennkraftmaschine eine vorgebbare Last übersteigt, da die Abgasmenge bei einer derartigen Brennkraftmaschine maßgeblich von der Last abhängt, wobei die Abgasmenge mit zunehmender Last steigt und mit abnehmender Last sinkt. Prinzipbedingt nimmt die Abgasmenge auch bei konstanter Last mit zunehmender Drehzahl zu.

Liegt der Brennkraftmaschine hingegen eine Qualitätsregelung zugrunde, bei der die Last über die Zusammensetzung des Frischgemischs gesteuert wird und sich die Abgasmenge im Wesentlichen mit der Drehzahl ändert, wird gemäß dem erfindungsgemäßen Verfahren zum Betreiben dieser Brennkraftmaschine die Bypaßleitung durch Öffnen des Steuerelements freigegeben, wenn die Drehzahl der Brennkraftmaschine eine vorgebbare Drehzahl übersteigt, da die Abgasmenge vorliegend mit zunehmender Drehzahl steigt und mit abnehmender Drehzahl sinkt.

Bei der erfindungsgemäßen Brennkraftmaschine handelt es sich um eine mittels Abgasturboaufladung aufgeladene Brennkraftmaschine, bei der zusätzlich berücksichtigt werden muß, dass sich der Ladedruck auf der Ansaugseite mit der Last und/oder der Drehzahl ändern kann und ebenfalls Einfluß auf die Abgasmenge hat. Die vorstehenden und vereinfacht dargestellten Zusammenhänge zwischen der Abgasmenge und der Last bzw. Drehzahl gelten dann folglich nicht in dieser allgemeinen Form. Daher stellt das erfindungsgemäße Verfahren ganz allgemein auf die Abgasmenge ab und nicht auf die Last bzw. Drehzahl.

In der Praxis erfolgt die Betätigung des Steuerelements dann vorzugsweise in Abhängigkeit von der Verbrennungsluftmasse und vom Ladedruck, da beide Betriebsgrößen leicht zu ermitteln sind bzw. bereits vorliegen und sich die Verbrennungsluftmasse von der Abgasmenge lediglich durch die eingebrachte Kraftstoffmenge unterscheidet, die ebenfalls bekannt ist.

Insofern sind Verfahrensvarianten vorteilhaft, bei denen ausgehend von einem bei geringen Abgasmengen in der Schließstellung befindlichen Steuerelement die Bypaßleitung durch Öffnen des Steuerelements freigegeben wird, sobald die Verbrennungsluftmasse eine vorgebbare Verbrennungsluftmasse und/oder der Ladedruck einen vorgebbaren Ladedruck überschreitet.

Vorteilhaft sind Verfahrensvarianten, bei denen die Bypaßleitung durch Öffnen des Steuerelements nur dann freigegeben wird, wenn die Abgasmenge der Brennkraftmaschine eine vorgebbare Abgasmenge übersteigt und für eine vorgebbare Zeitspanne *Δt₁* größer ist als diese vorgebbare Abgasmenge.

Die Einführung einer zusätzlichen Bedingung für das Öffnen der Bypaßleitung soll einen zu häufigen Moduswechsel verhindern, wenn die Abgasmenge nur kurzzeitig eine vorgebbare Abgasmenge überschreitet und dann wieder fällt bzw. um den vorgegebenen Wert für die Abgasmenge schwankt, ohne dass das Überschreiten ein Öffnen der Bypaßleitung rechtfertigen würde.

Beim Schließen der Bypaßleitung wird vorteilhafterweise analog vorgegangen. Das heißt, die Bypaßleitung wird wieder geschlossen, sobald die Abgasmenge eine vorgebbare Abgasmenge unterschreitet.

Vorteilhaft sind dabei Verfahrensvarianten, bei denen das Schließen vorgenommen wird, wenn die Abgasmenge die vorgebbare Abgasmenge unterschreitet und für eine vorgebbare Zeitspanne *Δt₂* kleiner ist als die vorgebbare Abgasmenge.

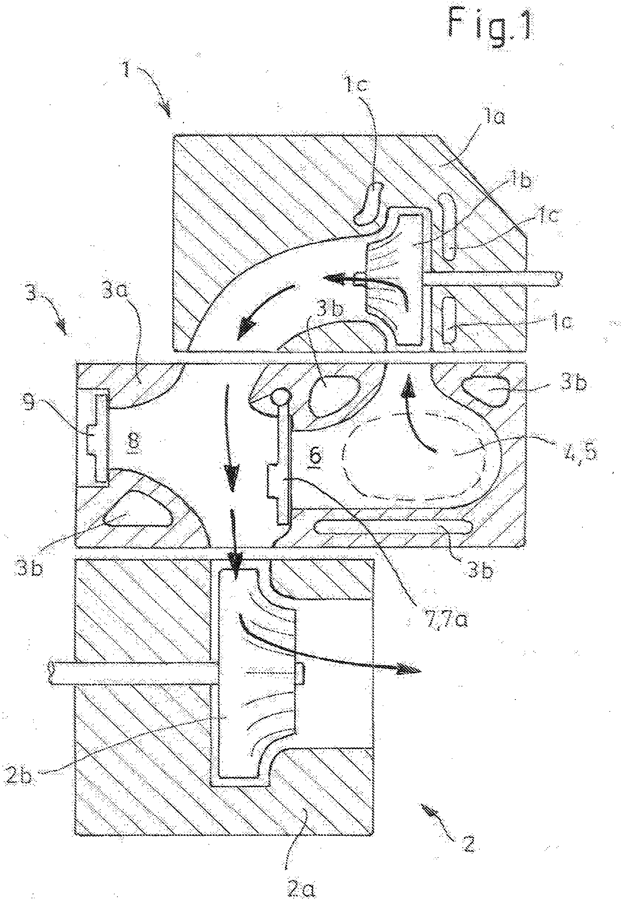

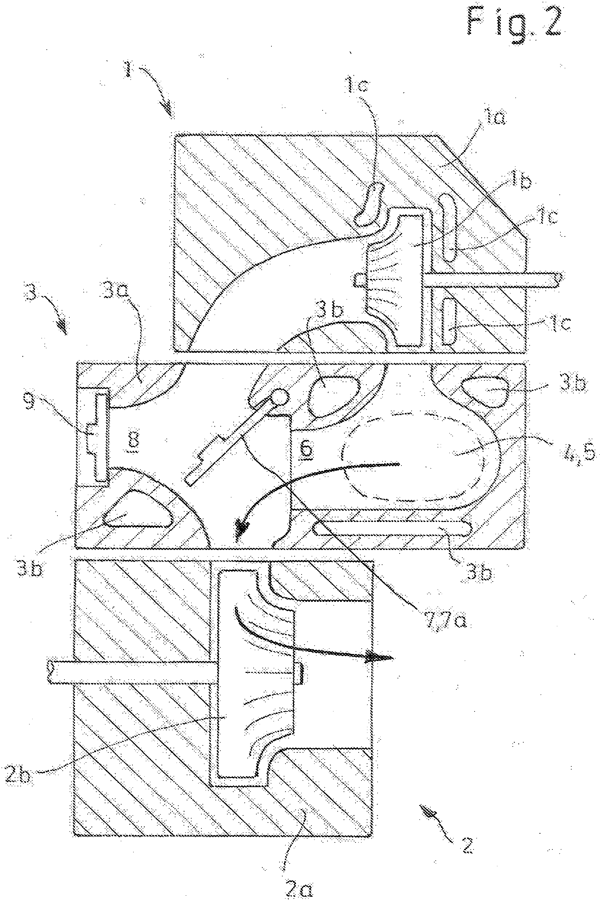

Im Folgenden wird die Erfindung anhand eines Ausführungsbeispiels gemäß den Figuren 1 und 2 näher beschrieben. Hierbei zeigt:
- Fig. 1: im Querschnitt einen Teil des Abgassystems einer ersten Ausführungsform der Brennkraftmaschine mit einem in der Schließstellung befindlichen Steuerelement, und
- Fig. 2: im Querschnitt die in Figur 1 dargestellte Ausführungsform der Brennkraftmaschine mit einem in der Offenstellung befindlichen Steuerelement.

Figur 1 zeigt im Querschnitt einen Teil des Abgassystems einer ersten Ausführungsform der Brennkraftmaschine mit einem in der Schließstellung befindlichen Steuerelement 7.

Die Abgasleitungen der Zylinder führen unter Ausbildung eines integrierten Abgaskrümmers 4 innerhalb des Zylinderkopfes zu einer Gesamtabgasleitung 5 zusammen.

Die aus dem Zylinderkopf austretende Gesamtabgasleitung 5 tritt stromabwärts des Krümmers 4 in das Gehäuse 3a eines Verteilers 3 ein, von dem aus das Abgas auf zwei unterschiedlich große Turbinen 1, 2 verteilt werden kann, wobei die Turbinen 1, 2 in Reihe angeordnet sind bzw. werden können.

Die Gesamtabgasleitung 5 führt durch das Verteilergehäuse 3a hindurch zu der kleinen Turbine 1. Hierzu geht die Gesamtabgasleitung 5 von dem Verteilergehäuse 3a in das erste Turbinengehäuse 1a, welches das Laufrad 1b der kleinen Turbine 1 aufnimmt, über. Stromabwärts der kleinen Turbine 1 tritt die Gesamtabgasleitung 5 erneut in das Verteilergehäuse 3a ein. Das Abgas wird via Gesamtabgasleitung 5 durch das Verteilergehäuse 3a hindurch bis in ein zweites Turbinengehäuse 2a geführt, welches das Laufrad 2b der großen Turbine 2 aufnimmt. Vorliegend bilden die drei Gehäuse 1a, 2a, 3a separate Bauteile, die miteinander verbunden werden. Um dies zu verdeutlichen, sind die Gehäuse 1a, 2a, 3a an ihren Montageflächen leicht beabstandet dargestellt.

Im Verteilergehäuse 3a ist eine als Steuerelement 7 dienende Klappe 7a angeordnet, die verschwenkbar ist und die eine die kleine Turbine 1 umgehende Bypaßleitung 6 freigibt bzw. versperrt. Figur 1 zeigt die Brennkraftmaschine mit einer in der Schließstellung befindlichen Klappe 7a. Das Abgas durchströmt in dem dargestellten Schaltzustand der Klappe 7a sowohl die kleine Hochdruckturbine 1 als auch die große Niederdruckturbine 2.

Eine zweite Bypaßleitung 8 dient der Abblasung von Abgas an der großen zweiten Turbine 2, wozu die zweite Bypaßleitung 8 stromaufwärts der großen Turbine 2 aus der Gesamtabgasleitung 5 abzweigt. Die zweite Bypaßleitung 8 zweigt innerhalb des Verteilergehäuses 3a aus der Gesamtabgasleitung 5 ab. Ein Absperrelement 9 ist vorgesehen, um die zweite Bypaßleitung 8 in einer Offenstellung freizugeben und in einer Schließstellung zu versperren.

Sowohl das erste Turbinengehäuse 1a als auch das Verteilergehäuse 3a sind zur Ausbildung einer Flüssigkeitskühlung mit mindestens einem Kühlmittelmantel 1c, 3b ausgestattet. Die Flüssigkeitskühlung vermindert die thermische Belastung der Gehäuse 1c, 3b durch die heißen Abgase, weshalb kostengünstige Werkstoffe für die Herstellung verwendet werden können.

Figur 2 zeigt im Querschnitt die in Figur 1 dargestellte Ausführungsform der Brennkraftmaschine mit einem in der Offenstellung befindlichen Steuerelement 7. Es soll nur ergänzend zu Figur 1 ausgeführt werden, weshalb im Übrigen Bezug genommen wird auf Figur 1 und die dazugehörige Beschreibung. Für dieselben Bauteile werden dieselben Bezugszeichen verwendet.

Übersteigt die Abgasmenge eine vorgebbare Abgasmenge wird durch Verschwenken der Klappe 7a die Bypaßleitung 6 freigegeben und die kleine Turbine 1 abgeschaltet. Bei der in Figur 2 dargestellten Ausführungsform versperrt die Klappe 7a in der Offenstellung die Gesamtabgasleitung 5 stromabwärts der kleinen Turbine 1 nicht vollständig.

Die Bypaßleitung 6 mündet stromaufwärts der großen Turbine 2 in die Gesamtabgasleitung 5, so dass das an der kleinen Turbine 1 vorbeigeführte Abgas durch die große Turbine 2 geleitet werden kann.

### Bezugszeichen

- 1: erste Turbine, kleine Turbine
- 1a: erstes Turbinengehäuse
- 1b: erstes Laufrad
- 1c: Kühlmittelmantel
- 2: zweite Turbine, große Turbine
- 2a: zweites Turbinengehäuse
- 2b: zweites Laufrad
- 3: Verteiler
- 3a: Verteilergehäuse
- 3b: Kühlmittelmantel
- 4: Abgaskrümmer
- 5: Gesamtabgasleitung
- 6: Bypaßleitung
- 7: Steuerelement
- 7a: verschwenkbare Klappe
- 8: zweite Bypaßleitung
- 9: Absperrelement

## Patentansprüche

1. Aufgeladene Brennkraftmaschine mit mindestens einem Zylinderkopf und mindestens zwei in Reihe angeordneten Turbinen (1, 2), bei der
- der mindestens eine Zylinderkopf mindestens zwei Zylinder aufweist, wobei jeder Zylinder mindestens eine Auslaßöffnung zum Abführen der Abgase aus dem Zylinder aufweist und sich an jede Auslaßöffnung eine Abgasleitung anschließt, und bei der
- die Abgasleitungen von mindestens zwei Zylindern unter Ausbildung eines integrierten Abgaskrümmers (4) innerhalb des Zylinderkopfes zu einer Gesamtabgasleitung (5) zusammenführen, wobei stromabwärts des Abgaskrümmers (4) zwei unterschiedlich große Turbinen (1, 2) in der Gesamtabgasleitung (5) angeordnet sind,
**dadurch gekennzeichnet, dass**
- die Gesamtabgasleitung (5) stromabwärts des Krümmers (4) in ein Verteilergehäuse (3a) eintritt, durch dieses Verteilergehäuse (3a) hindurch und zu der kleinen Turbine (1) führt, wobei von dem Verteilergehäuse (3a) aus das Abgas auf die zwei unterschiedlich großen Turbinen (1, 2) verteilbar ist,
- das erste Turbinengehäuse (1a), welches die kleine Turbine (1) aufnimmt, zur Ausbildung einer Flüssigkeitskühlung mit mindestens einem Kühlmittelmantel (1c) ausgestattet ist, und
- das zweite Turbinengehäuse (2a), welches die große Turbine (2) aufnimmt, nicht mit einer Flüssigkeitskühlung ausgestattet ist.

2. Aufgeladene Brennkraftmaschine nach Anspruch 1, **dadurch gekennzeichnet, dass**
- das Verteilergehäuse (3a) ein Steuerelement (7) umfaßt, das in einer Offenstellung eine die kleine Turbine (1) umgehende Bypaßleitung (6) freigibt und in einer Schließstellung diese Bypaßleitung (6) versperrt, wobei die Bypaßleitung (6) stromaufwärts der großen Turbine (2) in die Gesamtabgasleitung (5) einmündet.

3. Aufgeladene Brennkraftmaschine nach einem der vorherigen Ansprüche, **dadurch gekennzeichnet, dass** zumindest Teile des Verteilergehäuses (3a) und Teile des ersten Turbinengehäuses (1a) integral ausgebildet sind und ein monolithisches Bauteil bilden.

4. Aufgeladene Brennkraftmaschine nach einem der vorherigen Ansprüche, **dadurch gekennzeichnet, dass** das Verteilergehäuse (3a) und das erste Turbinengehäuse (1a) integral ausgebildet sind und ein monolithisches Bauteil bilden.

5. Aufgeladene Brennkraftmaschine nach Anspruch 1 oder 2, **dadurch gekennzeichnet, dass** das Verteilergehäuse (3a) und das erste Turbinengehäuse (1a) separate Bauteile sind, welche kraftschlüssig, formschlüssig und/oder stoffschlüssig miteinander verbunden sind.

6. Aufgeladene Brennkraftmaschine nach einem der vorherigen Ansprüche, **dadurch gekennzeichnet, dass** das Verteilergehäuse (3a) zur Ausbildung einer Flüssigkeitskühlung mit mindestens einem Kühlmittelmantel (3b) ausgestattet ist.

7. Aufgeladene Brennkraftmaschine nach Anspruch 6, **dadurch gekennzeichnet, dass** der mindestens eine Kühlmittelmantel (3b) des Verteilergehäuses (3a) mit dem mindestens einen Kühlmittelmantel (1c) des ersten Turbinengehäuses (1a) in Verbindung steht.

8. Aufgeladene Brennkraftmaschine nach einem der vorherigen Ansprüche, **dadurch gekennzeichnet, dass** die Gesamtabgasleitung (5) stromabwärts der kleinen Turbine (1) erneut in das Verteilergehäuse (3a) eintritt, durch dieses Verteilergehäuse (3a) hindurch und zu der großen Turbine (2) führt.

9. Aufgeladene Brennkraftmaschine nach einem der Ansprüche 2 bis 8, **dadurch gekennzeichnet, dass** die Bypaßleitung (6) vollständig in das Verteilergehäuse (3a) integriert ist.

10. Aufgeladene Brennkraftmaschine nach einem der Ansprüche 2 bis 9, **dadurch gekennzeichnet, dass** das Steuerelement (7) eine verschwenkbare Klappe (7a) ist.

11. Aufgeladene Brennkraftmaschine nach einem der vorherigen Ansprüche, **dadurch gekennzeichnet, dass** eine zweite Bypaßleitung (8) vorgesehen ist, die stromaufwärts der großen Turbine (2) aus der Gesamtabgasleitung (5) abzweigt.

12. Aufgeladene Brennkraftmaschine nach Anspruch 11, **dadurch gekennzeichnet, dass** die zweite Bypaßleitung (8) innerhalb des Verteilergehäuses (3a) aus der Gesamtabgasleitung (5) abzweigt.

13. Aufgeladene Brennkraftmaschine nach Anspruch 11 oder 12, **dadurch gekennzeichnet, dass** ein Absperrelement (9) vorgesehen ist, das die zweite Bypaßleitung (8) in einer Offenstellung freigibt und in einer Schließstellung versperrt.

14. Aufgeladene Brennkraftmaschine nach einem der vorherigen Ansprüche, **dadurch gekennzeichnet, dass** das erste Turbinengehäuse (1a) und das zweite Turbinengehäuse (2a) aus unterschiedlichen Werkstoffen gefertigt sind.

15. Verfahren zum Betreiben einer Brennkraftmaschine nach einem der vorherigen Ansprüche, **dadurch gekennzeichnet, dass** ausgehend von einem bei geringen Abgasmengen in der Schließstellung befindlichen Steuerelement (7) die Bypaßleitung (6) durch Öffnen des Steuerelements (7) freigegeben wird, sobald die Abgasmenge eine vorgebbare Abgasmenge überschreitet.

16. Verfahren nach Anspruch 15, **dadurch gekennzeichnet, dass** das Steuerelement (7) in die Offenstellung überführt wird, um die kleine Turbine (1) abzuschalten.

## Claims

1. Supercharged internal combustion engine having at least one cylinder head and at least two turbines (1, 2) arranged in series, in which
- the at least one cylinder head has at least two cylinders, with each cylinder having at least one outlet opening for discharging the exhaust gases out of the cylinder and each outlet opening being adjoined by an exhaust line, and in which
- the exhaust lines of at least two cylinders merge, to form an overall exhaust line (5), within the cylinder head so as to form an integrated exhaust manifold (4), with two turbines (1, 2) which are of different size being arranged downstream of the exhaust manifold (4) in the overall exhaust line (5),
**characterized in that**
- the overall exhaust line (5) downstream of the manifold (4) enters into a distributor housing (3a) and leads through said distributor housing (3a) and to the small turbine (1), wherein the exhaust gas can be distributed between the two turbines (1, 2) of different size from the distributor housing (3a),
- the first turbine housing (1a) which accommodates the small turbine (1) is equipped with at least one coolant jacket (1c) in order to form a liquid cooling arrangement, and
- the second turbine housing (2a) which accommodates the large turbine (2) is not equipped with a liquid cooling arrangement.

2. Supercharged internal combustion engine according to Claim 1, **characterized in that**
- the distributor housing (3a) comprises a control element (7) which, in an open position, opens up a bypass line (6) bypassing the small turbine (1) and which, in a closed position, blocks said bypass line (6), wherein the bypass line (6) opens into the overall exhaust line (5) upstream of the large turbine (2).

3. Supercharged internal combustion engine according to either of the preceding claims, **characterized in that** at least parts of the distributor housing (3a) and parts of the first turbine housing (1a) are configured integrally and form a monolithic component.

4. Supercharged internal combustion engine according to one of the preceding claims, **characterized in that** the distributor housing (3a) and the first turbine housing (1a) are configured integrally and form a monolithic component.

5. Supercharged internal combustion engine according to Claim 1 or 2, **characterized in that** the distributor housing (3a) and the first turbine housing (1a) are separate components which are connected to one another in a non-positively locking, positively locking and/or cohesive fashion.

6. Supercharged internal combustion engine according to one of the preceding claims, **characterized in that** the distributor housing (3a) is equipped with at least one coolant jacket (3b) in order to form a liquid cooling arrangement.

7. Supercharged internal combustion engine according to Claim 6, **characterized in that** the at least one coolant jacket (3b) of the distributor housing (3a) is connected to the at least one coolant jacket (1c) of the first turbine housing (1a).

8. Supercharged internal combustion engine according to one of the preceding claims, **characterized in that** the overall exhaust line (5) downstream of the small turbine (1) enters into the distributor housing (3a) again and leads through said distributor housing (3a) and to the large turbine (2).

9. Supercharged internal combustion engine according to one of Claims 2 to 8, **characterized in that** the bypass line (6) is integrated completely into the distributor housing (3a).

10. Supercharged internal combustion engine according to one of Claims 2 to 9, **characterized in that** the control element (7) is a pivotable flap (7a).

11. Supercharged internal combustion engine according to one of the preceding claims, **characterized in that** a second bypass line (8) is provided which branches off from the overall exhaust line (5) downstream of the large turbine (2).

12. Supercharged internal combustion engine according to Claim 11, **characterized in that** the second bypass line (8) branches off from the overall exhaust line (5) within the distributor housing (3a).

13. Supercharged internal combustion engine according to Claim 11 or 12, **characterized in that** a shutoff element (9) is provided which, in an open position, opens up the second bypass line (8) and, in a closed position, blocks said second bypass line.

14. Supercharged internal combustion engine according to one of the preceding claims, **characterized in that** the first turbine housing (1a) and the second turbine housing (2a) are produced from different materials.

15. Method for operating an internal combustion engine according to one of the preceding claims, **characterized in that**, proceeding from the control element (7) being situated in the closed position in the case of low exhaust-gas quantities, the bypass line (6) is opened up, by virtue of the control element (7) being opened, when the exhaust-gas quantity exceeds a predefinable exhaust-gas quantity.

16. Method according to Claim 15, **characterized in that** the control element (7) is moved into the open position in order to deactivate the small turbine (1).

## Revendications

1. Moteur à combustion interne suralimenté comprenant au moins une culasse et au moins deux turbines disposées en rangée (1, 2), dans lequel
- l'au moins une culasse présente au moins deux cylindres, chaque cylindre présentant au moins une ouverture de sortie pour évacuer les gaz d'échappement hors du cylindre et une conduite de gaz d'échappement se raccordant à chaque ouverture de sortie, et dans lequel
- les conduites de gaz d'échappement d'au moins deux cylindres convergent en une conduite de gaz d'échappement commune (5) en formant un collecteur de gaz d'échappement intégré (4) à l'intérieur de la culasse, deux turbines de tailles différentes (1, 2) étant disposées en aval du collecteur de gaz d'échappement (4) dans la conduite de gaz d'échappement commune (5),
**caractérisé en ce que**
- la conduite de gaz d'échappement commune (5) pénètre en aval du collecteur (4) dans un boîtier de distribution (3a), conduit à travers ce boîtier de distribution (3a) jusqu'à la petite turbine (1), le gaz d'échappement pouvant être distribué depuis le boîtier de distribution (3a) vers les deux turbines de tailles différentes (1, 2),
- le premier boîtier de turbine (1a), qui reçoit la petite turbine (1), étant muni d'au moins une enveloppe de réfrigérant (1c) pour réaliser un refroidissement de liquide, et
- le deuxième boîtier de turbine (2a) qui reçoit la grosse turbine (2) n'étant pas muni d'un refroidissement de liquide.

2. Moteur à combustion interne à suralimentation selon la revendication 1, **caractérisé en ce que**
- le boîtier de distribution (3a) comprend un élément de commande (7) qui, dans une position ouverte, libère une conduite de dérivation (6) contournant la petite turbine (1) et qui, dans une position de fermeture, bloque cette conduite de dérivation (6), la conduite de dérivation (6) débouchant en amont de la grosse turbine (2) dans la conduite de gaz d'échappement commune (5).

3. Moteur à combustion interne à suralimentation selon l'une quelconque des revendications précédentes, **caractérisé en ce qu'**au moins des parties du boîtier de distribution (3a) et des parties du premier boîtier de turbine (1a) sont réalisées de manière intégrale et constituent un composant monolithique.

4. Moteur à combustion interne à suralimentation selon l'une quelconque des revendications précédentes, **caractérisé en ce que** le boîtier de distribution (3a) et le premier boîtier de turbine (1a) sont réalisés de manière intégrale et constituent un composant monolithique.

5. Moteur à combustion interne à suralimentation selon la revendication 1 ou 2, **caractérisé en ce que** le boîtier de distribution (3a) et le premier boîtier de turbine (1a) sont des composants séparés qui sont connectés l'un à l'autre par engagement par force, par correspondance de formes et/ou par liaison de matière.

6. Moteur à combustion interne à suralimentation selon l'une quelconque des revendications précédentes, **caractérisé en ce que** le boîtier de distribution (3a) est muni d'au moins une enveloppe de réfrigérant (3b) pour réaliser un refroidissement de liquide.

7. Moteur à combustion interne à suralimentation selon la revendication 6, **caractérisé en ce que** l'au moins une enveloppe de réfrigérant (3b) du boîtier de distribution (3a) est en liaison avec l'au moins une enveloppe de réfrigérant (1c) du premier boîtier de turbine (1a).

8. Moteur à combustion interne à suralimentation selon l'une quelconque des revendications précédentes, **caractérisé en ce que** la conduite de gaz d'échappement commune (5) pénètre en aval de la petite turbine (1) à nouveau dans le boîtier de distribution (3a), et conduit à travers ce boîtier de distribution (3a) jusqu'à la grosse turbine (2).

9. Moteur à combustion interne à suralimentation selon l'une quelconque des revendications 2 à 8, **caractérisé en ce que** la conduite de dérivation (6) est complètement intégrée dans le boîtier de distribution (3a).

10. Moteur à combustion interne à suralimentation selon l'une quelconque des revendications 2 à 9, **caractérisé en ce que** l'élément de commande (7) est un clapet pivotant (7a).

11. Moteur à combustion interne à suralimentation selon l'une quelconque des revendications précédentes, **caractérisé en ce qu'**une deuxième conduite de dérivation (8) est prévue, laquelle, en aval de la grosse turbine (2), part de la conduite de gaz d'échappement commune (5).

12. Moteur à combustion interne à suralimentation selon la revendication 11, **caractérisé en ce que** la deuxième conduite de dérivation (8), à l'intérieur du boîtier de distribution (3a), part de la conduite de gaz d'échappement commune (5).

13. Moteur à combustion interne à suralimentation selon la revendication 11 ou 12, **caractérisé en ce qu'**un élément de blocage (9) est prévu, lequel libère la deuxième conduite de dérivation (8) dans une position ouverte et la bloque dans une position de fermeture.

14. Moteur à combustion interne à suralimentation selon l'une quelconque des revendications précédentes, **caractérisé en ce que** le premier boîtier de turbine (1a) et le deuxième boîtier de turbine (2a) sont fabriqués à partir de matériaux différents.

15. Procédé pour faire fonctionner un moteur à combustion interne selon l'une quelconque des revendications précédentes, **caractérisé en ce qu'**à partir d'un élément de commande (7) se trouvant dans la position de fermeture dans le cas de faibles quantités de gaz d'échappement, la conduite de dérivation (6) est libérée par ouverture de l'élément de commande (7) dès que la quantité de gaz d'échappement dépasse une quantité de gaz d'échappement prédéfinissable.

16. Procédé selon la revendication 15, **caractérisé en ce que** l'élément de commande (7) est transféré dans la position d'ouverture afin de déconnecter la petite turbine (1).
